# EUROPEAN PATENT APPLICATION

(11) **EP 4 604 382 A1**
(43) Date of publication of application: **20.08.2025**
(21) Application number: 24814153.3
(22) Date of filing: 13.05.2024
(51) Int. Cl.: H02P 6/20, H02P 6/08, B25F 5/00

(54) **ELECTRIC TOOL**

(30) Priority: 02.06.2023 CN 202310650856; 06.07.2023 CN 202310827744
(71) Applicant: Nanjing Chervon Industry Co., Ltd., Nanjing, Jiangsu 211106 (CN)
(72) Inventor: ZHENG, Shutao, Nanjing, Jiangsu 211106 (CN); LI, Shuang, Nanjing, Jiangsu 211106 (CN); XU, Tianxiao, Nanjing, Jiangsu 211106 (CN); MIN, Yuemei, Nanjing, Jiangsu 211106 (CN); DUAN, Junya, Nanjing, Jiangsu 211106 (CN)
(74) Representative: Sun, Yiming
(86) International application number: PCT/CN2024/092804
(87) International publication number: WO 2024/244952

(57) **Abstract**

Provided is a power tool. The power tool includes an electric motor; a power supply management device including a power supply and configured to supply power to at least the electric motor; a driving device configured to drive the electric motor to operate to implement a main function of the power tool; and an operating device configured to be operated by the user to activate one or more functions of the power tool and output a function signal corresponding to the function activated by the user to the power supply management device. The power tool has the main function and at least one auxiliary function, and the function signal includes a main function signal corresponding to the main function and an auxiliary function signal corresponding to each auxiliary function. The power supply management device is further configured to output a first enable signal when receiving any function signal and output a third enable signal to the driving device when receiving the main function signal. The power tool further includes a first controller connected to the power supply management device and configured to output a first drive signal to the driving device when receiving at least the first enable signal. The driving device is further configured to drive the electric motor to operate when receiving the third enable signal and the first drive signal.

## Description

This application claims priority to Chinese Patent Application No. 202310650856.2 filed with the China National Intellectual Property Administration (CNIPA) on Jun. 2, 2023 and Chinese Patent Application No. 202310827744.X filed with the CNIPA on Jul. 6, 2023, the disclosures of which are incorporated herein by reference in their entireties.

### TECHNICAL FIELD

The present application specifically relates to a power tool.

### BACKGROUND

The power tool is generally provided with a functional piece such as a drill bit or a saw blade at the free end of the output shaft and is provided with an operating member that can be operated by the user to switch the on and off states of the tool. When the user operates the power tool to switch from the off state to the on state, the electric motor in the tool is driven to operate so that the functional piece can perform operations such as tightening and cutting. When the user operates the power tool to switch from the on state to the off state, the electric motor in the tool is controlled to stop rotating, and the functional piece stops operating. In addition, in some scenarios, after the electric motor in the tool stops rotating, the user may still need to implement functions such as illumination and display of the power tool.

This part provides background information related to the present application, and the background information is not necessarily the existing art.

### SUMMARY

An object of the present application is to solve or at least alleviate part or all of the preceding problems. Therefore, an object of the present application is to provide a power tool.

To achieve the preceding object, the present application adopts the technical solutions below.

A power tool includes an electric motor; a power supply management device including a power supply and configured to supply power to at least the electric motor; a driving device configured to drive the electric motor to operate to implement a main function of the power tool; and an operating device configured to be operated by the user to activate one or more functions of the power tool and output a function signal corresponding to the function activated by the user to the power supply management device. The power tool has the main function and at least one auxiliary function, and the function signal includes a main function signal corresponding to the main function and an auxiliary function signal corresponding to each auxiliary function. The power supply management device is further configured to output a first enable signal when receiving any function signal and output a third enable signal to the driving device when receiving the main function signal. The power tool further includes a first controller connected to the power supply management device and configured to output a first drive signal to the driving device when receiving at least the first enable signal. The driving device is further configured to drive the electric motor to operate when receiving the third enable signal and the first drive signal.

In some examples, the operating device is further configured to output the main function signal to the first controller when the user activates the main function; and the first controller is also connected to the operating device and is further configured to output the first drive signal to the driving device when receiving the first enable signal and the main function signal.

In some examples, the driving device includes a driver circuit and a drive signal generation circuit; the first controller is further configured to output the first drive signal to the driver circuit and output a second drive signal to the drive signal generation circuit when receiving at least the first enable signal; the drive signal generation circuit is configured to output a voltage-boosted second drive signal to the driver circuit when receiving the third enable signal and the second drive signal; and the driver circuit is configured to drive the electric motor to operate when receiving the first drive signal and the second drive signal.

In some examples, the driving device includes a driver circuit and a driver integrated chip; the first controller is further configured to output the first drive signal to the driver integrated chip when receiving at least the first enable signal; the driver integrated chip is configured to output a processed first drive signal to the driver circuit when receiving the third enable signal and the first drive signal; and the driver circuit is configured to drive the electric motor to operate when receiving the first drive signal.

In some examples, the power tool further includes an auxiliary device configured to implement the auxiliary function of the power tool; and a second controller connected to the operating device and the power supply management device. The operating device is further configured to output the function signal corresponding to the function activated by the user to the second controller; the power supply management device is further configured to output a second enable signal to the second controller when receiving any function signal; and the second controller is configured to control a corresponding auxiliary device to operate to implement a corresponding auxiliary function when receiving the second enable signal and an auxiliary function signal corresponding to any auxiliary function.

In some examples, the auxiliary function includes an interface display function, and the auxiliary device includes an interface display device corresponding to the interface display function; and the second controller is further configured to, when receiving the second enable signal and an auxiliary function signal corresponding to the interface display function, light up the interface display device and turn off the interface display device after a first preset duration.

In some examples, the auxiliary function includes a state of charge display function, and the auxiliary device includes a state of charge display device corresponding to the state of charge display function; and the second controller is further configured to, when receiving the second enable signal and an auxiliary function signal corresponding to the state of charge display function, light up the state of charge display device and turn off the state of charge display device after a second preset duration.

In some examples, the operating device is further configured to be operated by the user to deactivate one or more functions of the power tool and interrupt the output of a function signal corresponding to a function deactivated by the user to the second controller and the power supply management device.

In some examples, the second controller is further configured to, when losing the main function signal, output a first keeping signal to the power supply management device and interrupt the transmission of the first keeping signal after a third preset duration; and the power supply management device is further configured to interrupt the output of the third enable signal to the driving device when losing the main function signal and the first keeping signal.

In some examples, the second controller is further configured to, when losing all the function signals, output a second keeping signal to the power supply management device and interrupt the transmission of the second keeping signal after a fourth preset duration; the fourth preset duration is greater than or equal to the third preset duration; and the power supply management device is further configured to interrupt the output of the first enable signal to the first controller when losing all the function signals and the second keeping signal.

In some examples, the second controller is further configured to, when losing all the function signals, output a third keeping signal to the power supply management device and interrupt the transmission of the third keeping signal after a fifth preset duration; the fifth preset duration is greater than or equal to the fourth preset duration; and the power supply management device is further configured to interrupt the output of the second enable signal to the second controller when losing all the function signals and the third keeping signal.

A table tool includes a workbench having at least one workplane for placing a workpiece; a cutting assembly acting on the workpiece; an electric motor operating to drive the cutting assembly to implement a main function of the table tool; a power supply management device including a power supply and configured to supply power to at least the electric motor; a driving device configured to drive the electric motor to operate to implement the main function of the table tool; and an operating device configured to be operated by the user to activate one or more functions of the power tool and output a function signal corresponding to the function activated by the user to the power supply management device. The table tool has the main function and at least one auxiliary function, and the function signal includes a main function signal corresponding to the main function and an auxiliary function signal corresponding to each auxiliary function. The power supply management device is further configured to output a first enable signal when receiving any function signal and output a third enable signal to the driving device when receiving the main function signal. The table tool further includes a first controller connected to the power supply management device and configured to output a first drive signal to the driving device when receiving at least the first enable signal. The driving device is further configured to drive the electric motor to operate when receiving the third enable signal and the first drive signal.

A power tool includes an electric motor; a power supply management device including a power supply and configured to supply power to at least the electric motor; a driving device configured to drive the electric motor to operate to implement a main function of the power tool; and an operating device configured to be operated by the user to activate the main function and output a main function signal corresponding to the main function to the power supply management device. The power supply management device is further configured to output a first enable signal and output a third enable signal to the driving device when receiving the main function signal. The power tool further includes a first controller connected to the power supply management device and configured to output a first drive signal to the driving device when receiving at least the first enable signal. The driving device is further configured to drive the electric motor to operate when receiving the third enable signal and the first drive signal.

A control method for a power tool includes: when the user activates one or more functions of the power tool, outputting, by an operating device, a function signal corresponding to the function activated by the user to a power supply management device; outputting, by the power supply management device, a first enable signal to a first controller when receiving any function signal and outputting a third enable signal to a driving device when receiving a main function signal corresponding to a main function; when receiving at least the first enable signal, outputting, by the first controller, a first drive signal to the driving device; and when receiving the third enable signal and the first drive signal, driving, by the driving device, an electric motor to operate to implement the main function.

A power tool includes an electric motor; a power supply management device including a power supply and configured to supply power to at least the electric motor; a driving device configured to drive the electric motor to operate; and an operating device configured to be operated by the user to switch the on and off states of the power tool and output a corresponding on signal or off signal. The power tool further includes a first controller connected to the operating device and the driving device and configured to output a drive signal to the driving device when receiving the on signal; and a second controller connected to the operating device and the driving device and configured to output a drive enable signal to the driving device when receiving the on signal. The driving device is further configured to drive the electric motor to operate when receiving the drive signal and the drive enable signal.

In some examples, the first controller is further configured to stop outputting the drive signal to the driving device when receiving the off signal.

In some examples, the power supply management device is connected to the first controller, and the power supply management device is further configured to output a first enable signal to the first controller when receiving the on signal.

In some examples, the first controller is further configured to output a first power-off signal to the power supply management device after waiting for a sixth preset duration upon receiving the off signal; and the power supply management device is further configured to stop outputting the first enable signal to the first controller when receiving the first power-off signal.

In some examples, the first controller is further configured to output a keeping signal to the power supply management device when receiving the on signal; and the power supply management device is further configured to continue outputting the first enable signal to the first controller when losing the on signal and receiving the keeping signal.

In some examples, the first controller is further configured to stop outputting the keeping signal to the power supply management device after waiting for a sixth preset duration upon receiving the off signal; and the power supply management device is further configured to stop outputting the first enable signal to the first controller when losing the keeping signal.

In some examples, the power tool further includes a parameter detection device connected to the electric motor and the second controller and configured to detect an operating parameter of the electric motor and transmit the operating parameter of the electric motor to the second controller. The second controller is further configured to output a second power-off signal to the power supply management device after waiting for a seventh preset duration upon receiving the off signal in the case where the operating parameter is still in a changing state; and the power supply management device is further configured to stop outputting the first enable signal to the first controller when receiving the second power-off signal.

In some examples, the second controller is further configured to stop outputting the drive enable signal to the driving device after waiting for the seventh preset duration upon receiving the off signal.

In some examples, the first controller is further configured to stop outputting the drive signal to the driving device when losing the first enable signal.

A control method for a power tool includes: when the power tool is switched to the on state, outputting, by an operating device, an on signal to a first controller and a second controller; when receiving the on signal, outputting, by the first controller, a drive signal to a driving device; when receiving the on signal, outputting, by the second controller, a drive enable signal to the driving device; and when receiving the drive signal and the drive enable signal, driving, by the driving device, an electric motor to operate.

### BRIEF DESCRIPTION OF DRAWINGS

FIG. 1 is a perspective view of a power tool according to an example.
FIG. 2 is a schematic diagram of electric control of the power tool shown in FIG. 1.
FIG. 3 is a circuit block diagram of an operating device in the power tool shown in FIG. 2.
FIG. 4 is a circuit block diagram of a power supply management device in the power tool shown in FIG. 2.
FIG. 5 is a circuit block diagram of a driving device in the power tool shown in FIG. 2.
FIG. 6 is another circuit block diagram of a driving device in the power tool shown in FIG. 2.
FIG. 7 is another schematic diagram of electric control of the power tool shown in FIG. 1.
FIG. 8 is a circuit block diagram of a power supply management device in the power tool shown in FIG. 7.
FIG. 9 is another schematic diagram of electric control of the power tool shown in FIG. 1.
FIG. 10 is a circuit block diagram of a power supply management device in the power tool shown in FIG. 9.
FIG. 11 is a flowchart of a control method for a power tool according to an example.
FIG. 12 is a perspective view of a power tool according to an example.
FIG. 13 is a schematic diagram of electric control of the power tool shown in FIG. 12.
FIG. 14 is a circuit block diagram of an electric motor, a driving device, a first controller, and a second controller in the power tool shown in FIG. 13.
FIG. 15 is a partial circuit diagram of the driving device in the power tool shown in FIG. 14.
FIG. 16 is another schematic diagram of electric control of the power tool shown in FIG. 12.
FIG. 17 is a partial circuit diagram of a power supply management device and an operating device in the power tool shown in FIG. 16.
FIG. 18 is another schematic diagram of electric control of the power tool shown in FIG. 12.
FIG. 19 is a partial circuit diagram of a power supply management device and an operating device in the power tool shown in FIG. 18.
FIG. 20 is a flowchart of a control method for a power tool according to an example.

### DETAILED DESCRIPTION

Before any example of the present application is explained in detail, it is to be understood that the present application is not limited to its application to the structural details and the arrangement of components set forth in the following description or illustrated in the preceding drawings.

In the present application, the term "comprising", "including", "having", or any other variation thereof is intended to encompass a non-exclusive inclusion so that a process, method, article, or device that includes a series of elements not only includes those elements but also includes other elements that are not expressly listed or further includes elements that are inherent to such a process, method, article, or device. In the absence of more limitations, an element defined by the statement "including a ..." does not exclude the presence of additional identical elements in a process, method, article, or apparatus including the element.

In the present application, the term "and/or" is an association relationship describing associated objects and indicates that three relationships may exist. For example, A and/or B may indicate that A exists alone, both A and B exist, and B exists alone. In addition, in the present application, the character "/" generally indicates an "and/or" relationship between associated objects before and after the character "/".

In the present application, the terms "connected", "combined", "coupled", or "mounted" may be directly connected, combined, coupled, or mounted and may also be indirectly connected, combined, coupled, or mounted. For example, direct connection means that two members or assemblies are connected together without intermediate members, and indirect connection means that two members or assemblies are separately connected to at least one intermediate member and the two members or assemblies are connected to each other by the at least one intermediate member. Furthermore, "connected" or "coupled" are not limited to physical or mechanical connections or couplings and may include electrical connections or couplings.

In the present application, it is to be understood by those of ordinary skill in the art that a relative term (for example, "about", "approximately", or "basically") used in conjunction with quantities or conditions is inclusive of the stated value and has the meaning indicated by the context. For example, the relative term includes at least a degree of error associated with the measurement of a particular value, a tolerance caused by manufacturing, assembly, and usage and associated with the particular value, and the like. Such a relative term should also be considered as disclosing the range defined by the absolute values of the two endpoints. The relative term may refer to plus or minus a certain percentage (such as 1%, 5%, 10%, or more) of an indicated value. A value not modified by the relative term should also be disclosed as a particular value with a tolerance. In addition, when expressing a relative angular position relationship (for example, basically parallel or basically perpendicular), "basically" may refer to plus or minus a certain degree (such as 1 degree, 5 degrees, 10 degrees, or more) based on an indicated angle.

In the present application, it is to be understood by those of ordinary skill in the art that the function implemented by an assembly may be implemented by one assembly, multiple assemblies, one part, or multiple parts. Similarly, the function implemented by a part may be implemented by one part, one assembly, or a combination of multiple parts.

In the present application, the terms "up", "down", "left", "right", "front", "rear", and other directional words are described based on the orientations or positional relationships shown in the drawings and should not be understood as limitations to the examples of the present application. In addition, in the context, it is to be understood that when an element is connected "above" or "below" another element, the element can not only be directly connected "above" or "below" the other element but can also be indirectly connected "above" or "below" the other element through an intermediate element. It is also to be understood that the directional words such as the upper side, lower side, left side, right side, front side, and rear side not only represent perfect orientations but can also be understood as lateral orientations. For example, the lower side may include directly below, bottom left, bottom right, front bottom, and rear bottom.

In the present application, the terms "controller", "processor", "central processing unit", " CPU", and "MCU" are interchangeable. Where a unit such as the "controller", the "processor", the "central processing unit", the "CPU", or the "MCU" is used to implement specific functions, these functions may be implemented by a single one of the preceding units or multiple preceding units unless otherwise indicated.

In the present application, the term "device", "module", or "unit" is used to implement a specific function in the form of hardware or software.

In the present application, the terms "computing", "judging", "controlling", "determining", "identifying", and the like refer to the operations and processes of a computer system or similar electronic computing device (for example, the controller or the processor).

The technical solutions of the present application are described below in detail in conjunction with drawings and examples.

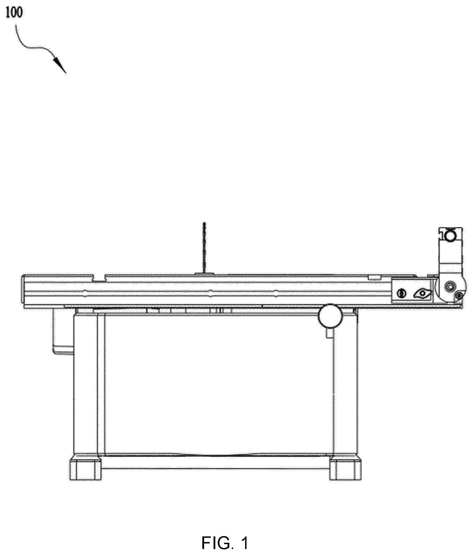

FIG. 1 shows a power tool 100 as an example of the present application. The power tool 100 shown in FIG. 1 is a table tool. The power tool in other examples may be a handheld power tool or a power tool of another form.

The power tool 100 has a main function and at least one auxiliary function. The main function is the primary purpose of the user using the power tool 100. In most cases, the main function relies on the motor drive for implementation. For example, the main function may be a cutting function. The auxiliary function may be a related function that assists the main function or may be a secondary function that is unrelated to the main function. For example, the auxiliary function may be a display function, including a display function of a table saw mode indicator light, a display function of a miter saw speed regulation interface, or the like.

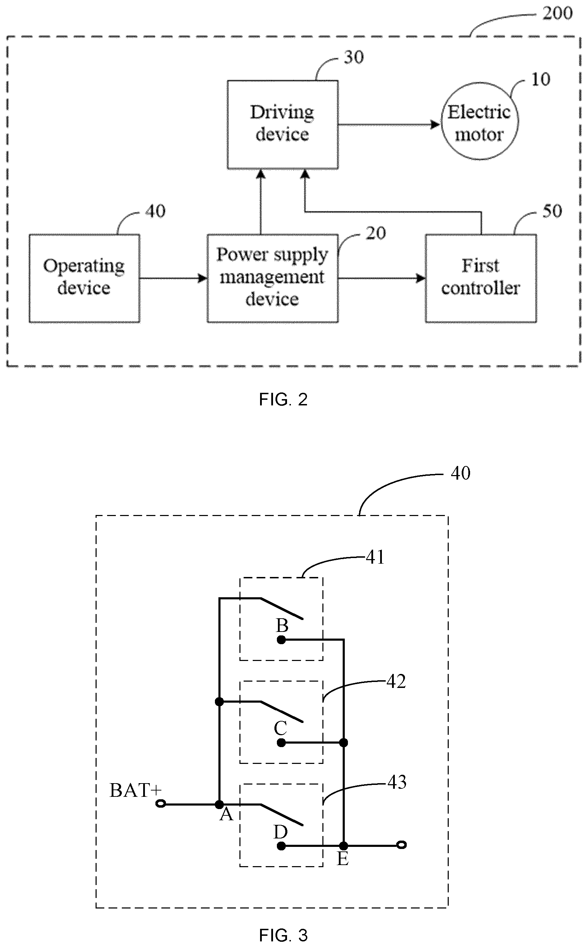

Referring to FIG. 2, FIG. 2 is a schematic diagram of electric control of the power tool shown in FIG. 1. A power tool 200 includes an electric motor 10, a power supply management device 20, and a driving device 30. The electric motor 10 may be connected to a cutting assembly such as a saw blade, and the operating electric motor 10 may drive the cutting assembly such as the saw blade to implement the main function of the power tool 200. In some examples, the electric motor 10 may be a brushless motor. The power supply management device 20 includes a power supply for supplying power to at least the electric motor 10. In some examples, the power supply management device 20 may include a power supply, transistors, power supply chips, and the like. The driving device 30 is connected to the electric motor 10 and can drive the electric motor 10 to operate to implement the main function of the power tool 200. In some examples, the driving device 30 may include a three-phase bridge inverter.

The power tool 200 further includes an operating device 40 for the user to operate to activate any one or more functions of the power tool 200. In some examples, the operating device 40 may include a mechanical switch, a signal switch, and the like. The operating device 40 is connected to the power supply management device 20. After the user operates the operating device 40 to activate any one or more functions of the power tool 200, the operating device 40 may output a function signal corresponding to the function activated by the user to the power supply management device 20. The function signal corresponding to the main function is a main function signal, and the function signal corresponding to each auxiliary function is an auxiliary function signal. In one case, the user activates only the main function through the operating device 40, and the operating device 40 outputs only the main function signal to the power supply management device 20. In another case, the user activates any one or more auxiliary functions, and the operating device 40 outputs the auxiliary function signal corresponding to each activated auxiliary function. In other cases, the user activates both the main function and any one or more auxiliary functions, and the operating device 40 outputs both the main function signal and the corresponding auxiliary function signal.

The power supply management device 20 can receive the function signal from the operating device 40 and may be configured to output a first enable signal that satisfies the voltage requirement of a first controller 50 to be described later, such as a 12 V voltage signal, to the first controller 50 after receiving any function signal and output a third enable signal to the driving device 30 after receiving the main function signal. In one case, the power supply management device 20 receives only the main function signal, outputs the first enable signal to the first controller 50, and outputs the third enable signal to the driving device 30. In another case, the power supply management device 20 receives any one or more auxiliary function signals and outputs the first enable signal to the first controller 50. In other cases, the power supply management device 20 receives both the main function signal and any one or more auxiliary function signals, outputs the first enable signal to the first controller 50, and outputs the third enable signal to the driving device 30.

The power tool 200 further includes the first controller 50 for controlling and implementing the main function. In some examples, the first controller 50 may include a processor such as a CPU or an MCU and a memory storing instructions executable by the processor. In some examples, the first controller 50 is connected to the power supply management device 20 and the driving device 30, can receive the first enable signal from the power supply management device 20, and may be configured to output a first drive signal to the driving device 30 after receiving at least the first enable signal. In some other examples, the first controller 50 is also connected to the operating device 40. After the user operates the operating device 40 to activate the main function, the operating device 40 also outputs the main function signal to the first controller 50. The first controller 50 outputs the first drive signal to the driving device 30 after receiving the first enable signal and the main function signal.

The driving device 30 can receive the third enable signal from the power supply management device 20 and the first drive signal from the first controller 50. The driving device 30 may be configured to drive the electric motor 10 to operate to implement the main function of the power tool 200 after receiving the third enable signal and the first drive signal; and the driving device 30 cannot drive the electric motor 10 to operate in the case where the driving device 30 receives only the first drive signal and does not receive the third enable signal.

The following is a more detailed description of the devices in the power tool 200 shown in FIG. 2.

Referring to FIG. 3, FIG. 3 is a circuit block diagram of the operating device 40 in the power tool 200 shown in FIG. 2. In an example, the operating device 40 may include a switch 41 representing the main function, a switch 42 representing a first auxiliary function, and a switch 43 representing a second auxiliary function. The A terminal is connected to the power supply. When the user presses the switch 41, a conductive path is established between the A terminal and the B terminal, and the main function signal may be obtained from the B terminal. When the user presses the switch 42, a conductive path is established between the A terminal and the C terminal, and the auxiliary function signal corresponding to the first auxiliary function may be obtained from the C terminal. When the user presses the switch 43, a conductive path is established between the A terminal and the D terminal, and the auxiliary function signal corresponding to the second auxiliary function may be obtained from the D terminal. When the user presses any one or more of the switches 41, 42, and 43, it may be detected through the E terminal that the user activates at least one function.

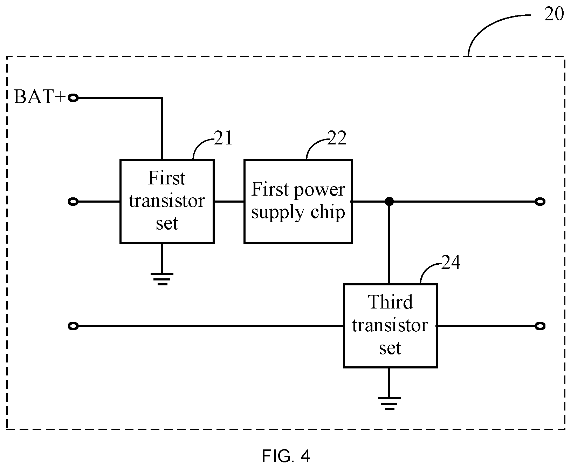

Referring to FIG. 4, FIG. 4 is a circuit block diagram of the power supply management device 20 in the power tool 200 shown in FIG. 2. In an example, the power supply management device 20 may include a power supply (not shown), a first transistor set 21, a first power supply chip 22, and a third transistor set 24. The first transistor set 21 is connected to the operating device 40, the power supply, and the first power supply chip 22. The first power supply chip 22 is also connected to the third transistor set 24 and the first controller 50. The third transistor set 24 is also connected to the operating device 40 and the driving device 30.

When the user activates the main function, the first transistor set 21 obtains the main function signal from the operating device 40 and then the conductive path between the first transistor set 21 and the first power supply chip 22 is established. The first power supply chip 22 then outputs the first enable signal to the third transistor 24 and the first controller 50. After obtaining the first enable signal from the first power supply chip 22 and the main function signal from the operating device 40, the third transistor 24 outputs the third enable signal to the driving device 30.

When the user activates any one or more auxiliary functions but does not activate the main function, the first transistor set 21 obtains the auxiliary function signal from the operating device 40 and then the conductive path between the first transistor set 21 and the first power supply chip 22 is established. The first power supply chip 22 then outputs the first enable signal to the third transistor 24 and the first controller 50. The third transistor 24 does not obtain the main function signal and cannot output the third enable signal to the driving device 30.

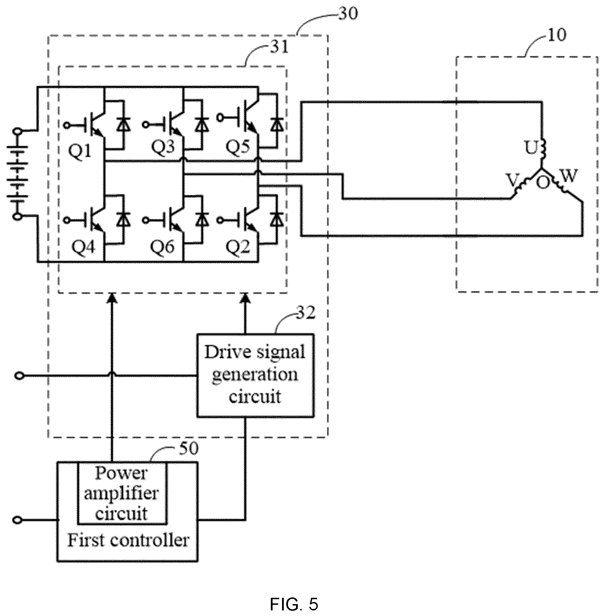

Referring to FIG. 5, FIG. 5 is a circuit block diagram of the driving device 30 in the power tool 200 shown in FIG. 2. In an example, the driving device 30 may include a driver circuit 31 and a drive signal generation circuit 32. The driver circuit 31 is connected to the drive signal generation circuit 32 and the first controller 50 and may be a three-phase bridge inverter formed by six switching elements. By controlling the on and off of the six switching elements, the commutation of the electric motor 10 can be controlled. The drive signal generation circuit 32 is also connected to the power supply management device 20 and the first controller 50, may be a bootstrap circuit, and can perform voltage boosting on the received signal.

The first controller 50 may be further configured to, after receiving at least the first enable signal, output a first drive signal for controlling three switching elements in the driver circuit 31 to the driver circuit 31 and output a second drive signal for controlling the other three switching elements in the driver circuit 31 to the drive signal generation circuit 32. In some examples, in addition to the processor and the memory, the first controller 50 further includes a power amplifier circuit that can amplify the power of the first drive signal to be outputted and output the power-amplified first drive signal to the driver circuit 31.

The drive signal generation circuit 32 receives the second drive signal from the first controller 50 and the third enable signal from the power supply management device 20 and may be configured to, after receiving the second drive signal and the third enable signal, perform voltage boosting on the second drive signal and output the voltage-boosted second drive signal to the driver circuit 31.

The driver circuit 31 can receive the first drive signal from the first controller 50 and the second drive signal from the drive signal generation circuit 32 and may be configured to drive the electric motor 10 to operate to implement the main function of the power tool 200 after receiving the first drive signal and the second drive signal.

When the user activates the main function, the drive signal generation circuit 32 outputs the voltage-boosted second drive signal to the driver circuit 31 after receiving the third enable signal from the power supply management device 20 and the second drive signal from the first controller 50, and the driver circuit 31 drives the electric motor 10 to operate after receiving the first drive signal from the first controller 50 and the second drive signal from the drive signal generation circuit 32.

When the user activates any one or more auxiliary functions but does not activate the main function, the drive signal generation circuit 32 does not receive the third enable signal from the power supply management device 20 and cannot output the second drive signal to the driver circuit 31, and the driver circuit 31 does not receive the second drive signal from the drive signal generation circuit 32 and cannot drive the electric motor 50 to operate.

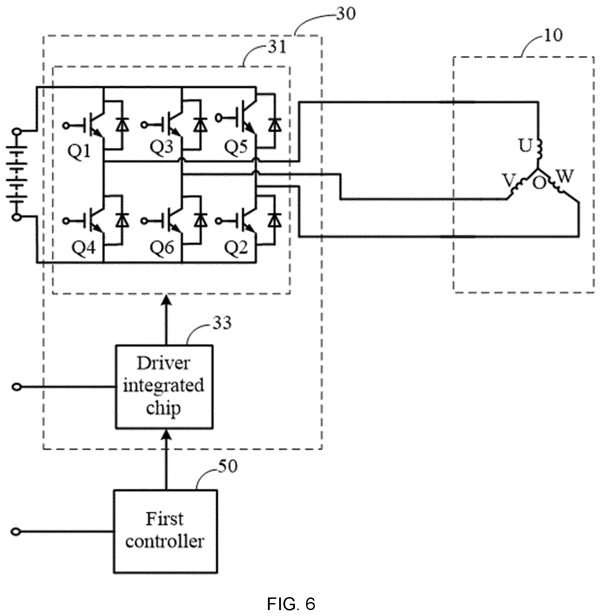

Referring to FIG. 6, FIG. 6 is another circuit block diagram of the driving device 30 in the power tool 200 shown in FIG. 2. In another example, the driving device 30 may include a driver circuit 31 and a driver integrated chip 33. The driver circuit 31 is connected to the driver integrated chip 33; and the driver integrated chip 33 is also connected to the power supply management device 20 and the first controller 50.

The first controller 50 may be further configured to output the first drive signal and/or the second drive signal for controlling the driver circuit 31 to the driver integrated chip 33 after receiving at least the first enable signal. The driver integrated chip 33 receives the drive signal from the first controller 50 and the third enable signal from the power supply management device 20 and may be configured to, after receiving the drive signal and the third enable signal, process the drive signal and output the processed drive signal to the driver circuit 31. The driver circuit 31 can receive the processed drive signal from the driver integrated chip 33 and may be configured to drive the electric motor 10 to operate to implement the main function of the power tool 200 after receiving the drive signal.

When the user activates the main function, the driver integrated chip 33 outputs the processed drive signal to the driver circuit 31 after receiving the third enable signal from the power supply management device 20 and the drive signal from the first controller 50. The driver circuit 31 drives the electric motor 10 to operate after receiving the drive signal from the driver integrated chip 33.

When the user activates any one or more auxiliary functions but does not activate the main function, the driver integrated chip 33 does not receive the third enable signal from the power supply management device 20 and cannot output the processed drive signal to the driver circuit 31, and the driver circuit 31 does not receive the drive signal from the driver integrated chip 33 and cannot drive the electric motor 10 to operate.

In the examples described in FIGS. 2 to 6, at least two drive signals are required for driving the electric motor to operate normally. Although the first drive signal can be sent out after the first controller is powered on, the third enable signal sent out by the power supply management device is independently dependent on user operation so that it is ensured that the electric motor does not start accidentally when the auxiliary function is activated but the main function is not activated or when the first controller fails, thereby satisfying product safety regulations and improving the safety of the tool and the user experience.

In addition, in some other examples, the power tool 200 may have only the main function. When the user activates the main function of the power tool 200, the operating device 40 outputs the main function signal to the power supply management device 20. After receiving the main function signal, the power supply management device 20 outputs the first enable signal to the first controller 50 and outputs the third enable signal to the driving device 30. The first controller 50 outputs the first drive signal to the driving device 30 after receiving at least the first enable signal. The driving device 30 drives the electric motor 10 to operate to implement the main function after receiving the third enable signal and the first drive signal. In this manner, the electric motor of the power tool does not start accidentally when the first controller fails, thereby ensuring user safety and improving the user experience.

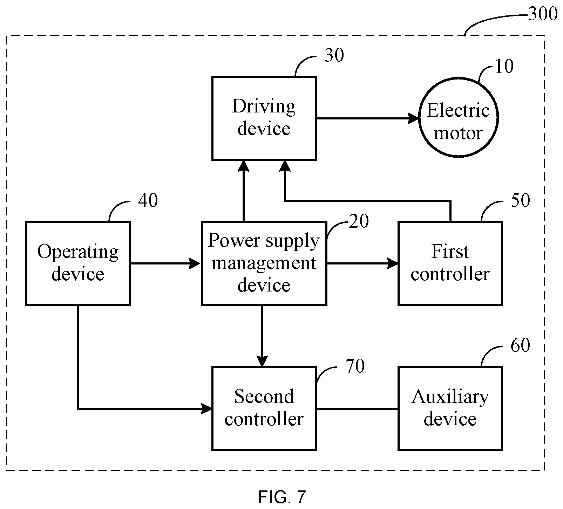

Referring to FIG. 7, FIG. 7 is another schematic diagram of electric control of the power tool shown in FIG. 1. A power tool 300 may further include an auxiliary device 60 in addition to the electric motor 10, the power supply management device 20, the driving device 30, the driving device 40, and the first controller 50. The number of auxiliary devices 60 may correspond to the number of auxiliary functions of the power tool 300, that is, each auxiliary device implements a corresponding auxiliary function. In some examples, the auxiliary function is a display function, and the auxiliary device may be a light-emitting diode (LED) light group or a display screen.

To ensure that all functions of the power tool can be implemented smoothly without interfering with each other, based on the power tool 200 described above, the operating device 40 may output a function signal corresponding to the function activated by the user to a second controller 70 to be described later. The power supply management device 20 may be further configured to output a second enable signal that satisfies the voltage requirement of the second controller 70, such as a 3.3 V voltage signal, to the second controller 70 after receiving any function signal.

The power tool 300 further includes the second controller 70 for controlling and implementing the auxiliary function. In some examples, the second controller 70 may include a processor such as a CPU or an MCU and a memory storing instructions executable by the processor. The second controller 70 is connected to the operating device 10 and the power supply management device 20, can receive the function signal from the operating device 10 and the second enable signal from the power supply management device 20, and may be configured to control the corresponding auxiliary device to operate to implement the corresponding auxiliary function after receiving the second enable signal and the auxiliary function signal.

In an example, the power tool 300 has an auxiliary function which is an interface display function. The auxiliary device includes an interface display device 61 corresponding to the interface display function. After the user activates the interface display function through the operating device 40, the operating device 40 outputs a first auxiliary function signal corresponding to the interface display function to the power supply management device 20 and the second controller 70. The power supply management device 20 outputs a second enable signal to the second controller 70. After receiving the second enable signal and the first auxiliary function signal, the second controller 70 lights up the interface display device 61 and turns off the interface display device 61 after a first preset duration T1.

In another example, in addition to the interface display function, the power tool 300 further has another auxiliary function which is a state of charge display function. In addition to the interface display device 61, the auxiliary device further includes a state of charge display device 62 corresponding to the state of charge display function. The user activates both the state of charge display function and the state of charge display function through the operating device 40. The operating device 40 outputs the first auxiliary function signal corresponding to the interface display function and a second auxiliary function signal corresponding to the state of charge display function to the power supply management device 20 and the second controller 70. The power supply management device 20 outputs the second enable signal to the second controller 70. After receiving the second enable signal, the first auxiliary function signal, and the second auxiliary function signal, the second controller 70 lights up the interface display device 61 and turns off the interface display device 61 after the first preset duration T1, and the second controller 70 lights up the state of charge display device 62 and turns off the state of charge display device 62 after a second preset duration T2. For example, the first preset duration T1 may be 5min, and the second preset duration T2 may be 10s.

The following is a more detailed description of the devices in the power tool 300 shown in FIG. 7.

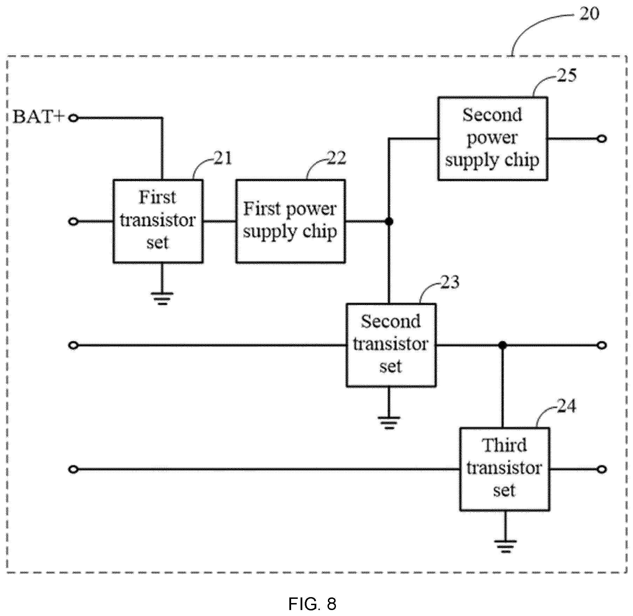

Referring to FIG. 8, FIG. 8 is a circuit block diagram of the power supply management device 20 in the power tool 300 shown in FIG. 7. In an example, the power supply management device 20 may include a power supply (not shown), a first transistor set 21, a first power supply chip 22, a second transistor set 23, a third transistor set 24, and a second power supply chip 25. The first transistor set 21 is connected to the operating device 40, the power supply, and the first power supply chip 22. The first power supply chip 22 is also connected to the second transistor set 23 and the second power supply chip 25. The second transistor set 23 is also connected to the first controller 50 and the third transistor set 24. The third transistor set 24 is also connected to the operating device 40 and the driving device 30.

When the user activates the main function, the first transistor set 21 obtains the main function signal from the operating device 40 and then the conductive path between the first transistor set 21 and the first power supply chip 22 is established. Then, the conductive path between the first power supply chip 22 and the second power supply chip 25 and the conductive path between the first power supply chip 22 and the second transistor set 23 are established. The second power supply chip 25 then outputs the second enable signal to the second controller 70. The second transistor set 23 then outputs the first enable signal to the first controller 50 and the third transistor set 24. The third transistor set 24 obtains the first enable signal from the second transistor set 22 and the main function signal from the operating device 40 and then outputs the third enable signal to the driving device 30.

When the user activates any one or more auxiliary functions and does not activate the main function, the first transistor set 21 obtains the auxiliary function signal from the operating device 40 and then the conductive path between the first transistor set 21 and the first power supply chip 22 is established. Then, the conductive path between the first power supply chip 22 and the second power supply chip 25 and the conductive path between the first power supply chip 22 and the second transistor set 23 are established. The second power supply chip 25 then outputs the second enable signal to the second controller 70. The second transistor set 23 then outputs the first enable signal to the first controller 50 and the third transistor set 24. The third transistor set 24 does not obtain the main function signal and cannot output the third enable signal to the driving device 30.

In the preceding example, the first power supply chip no longer directly supplies power to the first controller. Instead, the second power supply chip and the second transistor set led out from the first power supply chip supply power to the second controller and the first controller, respectively so that the power supply paths of the first controller and the second controller can be independent of each other, and the interruption of power supply to the first controller does not interfere with the second controller.

In the example described in FIGS. 7 and 8, the two controllers are used for being responsible for the main function and the auxiliary function of the power tool, respectively. In response to different function signals, the first controller and the second controller can independently control the electric motor and the auxiliary devices to implement the corresponding functions without interfering with each other, thereby ensuring that the power tool can operate normally according to the actual intention of the user.

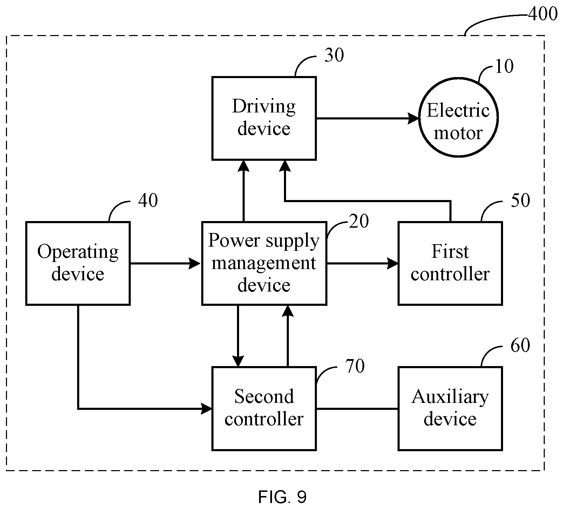

Referring to FIG. 9, FIG. 9 is another schematic diagram of electric control of the power tool shown in FIG. 1. A power tool 400 may include the electric motor 10, the power supply management device 20, the driving device 30, the driving device 40, the first controller 50, the auxiliary device 60, and the second controller 70.

Considering that the start and stop of the main function of the power tool depend on the user operation and the auxiliary function is activated by the user and deactivated automatically after a default duration, to ensure that the start and stop of the functions can be implemented smoothly, based on the power tool 300 described above, the operating device 40 may interrupt the output of the function signal corresponding to the function deactivated by the user to the power supply management device 20 and the second controller 70 after the user deactivates any one or more functions of the power tool 400.

When the second controller 70 loses the function signal from the operating device 40, the second controller 70 may be configured to, after losing the main function signal, output a first keeping signal to the power supply management device 20 and interrupt the transmission of the first keeping signal after a third preset duration T3; and the second controller 70 may be configured to, after losing all the function signals, output a second keeping signal and a third keeping signal to the power supply management device 20, interrupt the transmission of the second keeping signal after a fourth preset duration T4, and interrupt the transmission of the third keeping signal after a fifth preset duration T5.

The power supply management device 20 loses the function signal from the operating device 40 and receives the keeping signal from the second controller 70. The power supply management device 20 may be configured to, when losing the main function signal and obtaining the first keeping signal, continue outputting the third enable signal and when losing the main function signal and the first keeping signal after the third preset duration T3, interrupt the output of the third enable signal to the driving device 30; when losing all the function signals and obtaining the second keeping signal, continue outputting the first enable signal and when losing all the function signals and the second keeping signal after the fourth preset duration T4, interrupt the output of the first enable signal to the first controller 50; and when losing all the function signals and obtaining the third keeping signal, continue outputting the second enable signal and when losing all the function signals and the third keeping signal after the fifth preset duration T5, interrupt the output of the second enable signal to the second controller 70.

The third preset duration T3 is less than or equal to the fourth preset duration T4, and the fourth preset duration T4 is less than or equal to the fifth preset duration T5. For example, the third preset duration T3 and the fourth preset duration T4 may be 10s, and the fifth preset duration T5 may be 5min. In addition, the fifth preset duration T5 is greater than or equal to the time taken by the auxiliary devices to implement the corresponding auxiliary functions so that the auxiliary functions can be implemented before the device is powered off. For example, the first preset duration T1 during which the interface display device 61 implements the interface display function is 5min, the second preset duration T2 during which the state of charge display device 62 implements the state of charge display function is 10s, and the fifth preset duration T5 may be 5min.

The following is a more detailed description of the devices in the power tool 400 shown in FIG. 9.

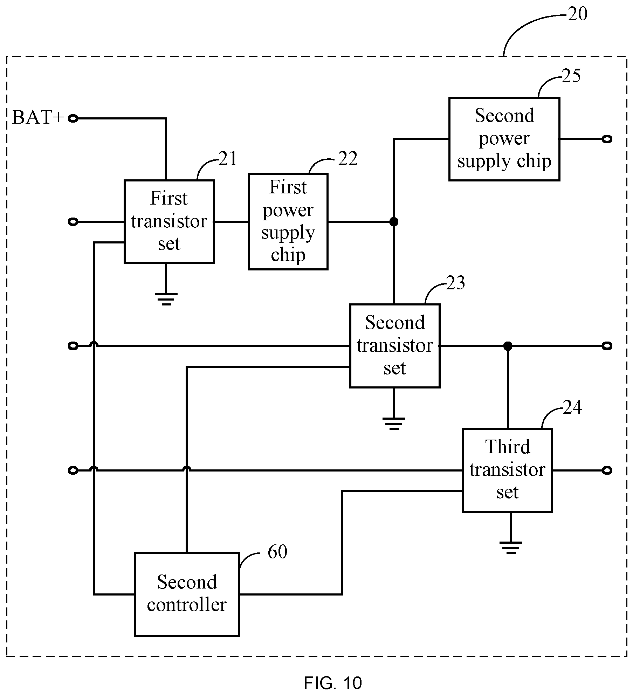

Referring to FIG. 10, FIG. 10 is a circuit block diagram of the power supply management device 20 in the power tool 400 shown in FIG. 9. In an example, the power supply management device 20 may include a power supply (not shown), a first transistor set 21, a first power supply chip 22, a second transistor set 23, a third transistor set 24, and a second power supply chip 25. The first transistor set 21 is connected to the operating device 40, the power supply, the first power supply chip 22, and the second controller 70. The first power supply chip 22 is also connected to the second transistor set 23 and the second power supply chip 25. The second transistor set 23 is also connected to the first controller 50, the third transistor set 24, and the second controller 70. The third transistor set 24 is also connected to the operating device 40, the driving device 30, and the second controller 70.

The case where the third preset duration T3 and the fourth preset duration T4 are each 10s and the fifth preset duration T5 is 5min is used as an example. When the user deactivates only the main function, the third transistor set 24 obtains the first keeping signal when losing the main function signal and may continue outputting the third enable signal until the first keeping signal is lost after 10s, and then the third transistor set 24 interrupts the output of the third enable signal to the driving device 30 so that the electric motor 10 stops 10s after the user deactivates the main function.

When the user deactivates only the auxiliary functions, the output of the first enable signal, the second enable signal, and the third enable signal is not affected. For the auxiliary function signals that have been received, the second controller 70 may still control and implement the corresponding auxiliary functions according to the corresponding durations required by the auxiliary functions.

When the user deactivates all the functions, in addition to the third transistor set interrupting the output of the third enable signal after 10s to stop the electric motor 10, the second transistor set 23 obtains the second keeping signal when losing all the function signals and may continue outputting the first enable signal until the second keeping signal is lost after 10s, and then the second transistor set 23 interrupts the output of the first enable signal to the first controller 50 so that the first controller 50 is powered off 10s after the user deactivates all the functions. Moreover, when losing all the function signals, the first transistor set 21 obtains the third keeping signal, the conductive path between the first transistor set 21 and the first power supply chip 22 and the conductive path between the first transistor set 21 and the second power supply chip 25 may still exist, and the output of the second enable signal continues until the third keeping signal is lost after 5min. Then, the conductive path between the first transistor set 21 and the first power supply chip 22 and the conductive path between the first transistor set 21 and the second power supply chip 25 are cut off. The second power supply chip 25 interrupts the output of the second enable signal to the second controller 70. In this manner, the second controller 70 is powered off 5min after the user deactivates all the functions. Within these 5 minutes, for the auxiliary function signals that have been received, the second controller 70 may still control and implement the corresponding auxiliary functions according to the durations required by the auxiliary functions.

In the example described in FIGS. 9 and 10, the second controller outputs a corresponding keeping signal to the power supply management device according to the corresponding preset duration based on the function deactivated by the user, and the power supply management device determines whether to interrupt the output of the enable signal and the drive signal based on the function signal and the keeping signal so that it is ensured that the first controller and the second controller can smoothly implement various functions without interfering with each other and can be powered off in time after implementing the functions, thereby satisfying product safety regulations and improving the safety of the tool and the user experience.

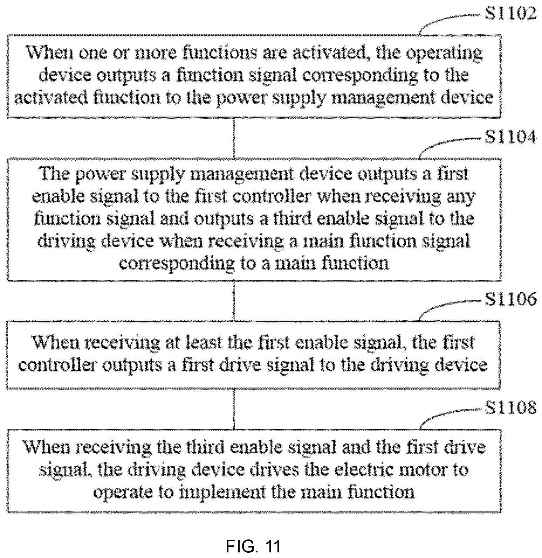

FIG. 11 shows a control method for a power tool as an example of the present application. The control method shown in FIG. 11 may be applied to the power tool described above.

The control method for a power tool may include the specific steps below.

In S1102, when the user activates one or more functions of the power tool, the operating device outputs a function signal corresponding to the function activated by the user to the power supply management device.

In S1104, the power supply management device outputs a first enable signal to the first controller when receiving any function signal and outputs a third enable signal to the driving device when receiving a main function signal corresponding to a main function.

In S1106, when receiving at least the first enable signal, the first controller outputs a first drive signal to the driving device.

In S1108, when receiving the third enable signal and the first drive signal, the driving device drives the electric motor to operate to implement the main function.

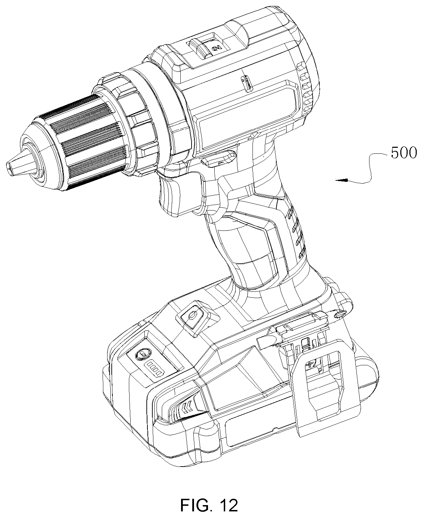

FIG. 12 shows a power tool 500 as another example of the present application. The power tool 500 shown in FIG. 12 is a direct current (DC) electric drill. The power tool in other examples may be a handheld power tool of another type such as a nail gun or an electric circular saw or may be a table tool such as a table saw or a miter saw.

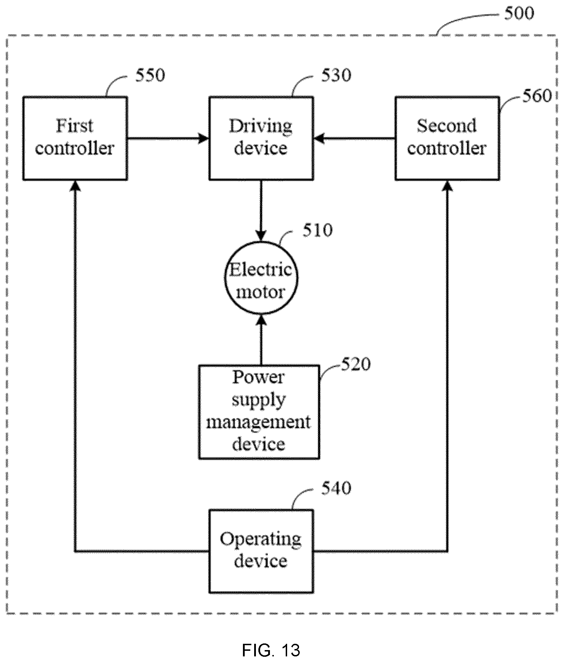

Referring to FIG. 13, FIG. 13 is a schematic diagram of electric control of the power tool 500 shown in FIG. 12. The power tool 500 includes an electric motor 510, a power supply management device 520, and a driving device 530. The rotating motor shaft of the electric motor 510 can drive the output shaft to rotate directly or indirectly through a transmission assembly so that the output shaft drives an accessory connected to the output shaft such as a drill bit or a saw blade to perform an operation such as tightening or cutting. In some examples, the electric motor 510 may be a brushless DC electric motor. The power supply management device 520 includes a power supply and can supply power to at least the electric motor 510. In some examples, the power supply management device 520 may include a power supply such as a detachable battery pack, integrated power supply chips, transistors, resistors, capacitors, inductors, and other components. The driving device 530 is connected to the electric motor 510 and can drive the electric motor 510 to operate for tightening, cutting, and other operations. In some examples, the driving device 530 may include a three-phase bridge inverter, a driver chip, and the like.

The power tool 500 further includes an operating device 540 for the user to operate to switch the on and off states of the power tool 500. In some examples, the operating device 540 may include a mechanical switch, a signal switch, and the like. The operating device 540 is connected to the power supply management device 520 and is also connected to a first controller 550 and a second controller 560 which are described below. When the user activates the power tool 500, the operating device 540 may output the on signal indicating that the power tool is activated to the first controller 550 and the second controller 560. When the user deactivates the power tool 500, the operating device 540 may output the off signal indicating that the power tool is deactivated to the first controller 550 and the second controller 560. In some examples, the on and off signals may be voltage signals or voltage jump signals. For example, a high voltage signal is the on signal and a low voltage signal is the off signal. In some other examples, the on and off signals may be digital signals with more complex formats that carry specific information.

The power tool 500 further includes the first controller 550 and the second controller 560. In some examples, the first controller 550 may include a processor such as a CPU or an MCU and a memory storing instructions executable by the processor, and the second controller 560 also includes a processor such as a CPU or an MCU and a memory storing instructions executable by the processor.

The first controller 550 is connected to the driving device 530 and the operating device 540 and can receive the on signal from the operating device 540. The first controller 550 is configured to, when receiving the on signal, output the drive signal to the driving device 530. Specifically, the drive signal is a control signal for the driving device 530, which is used for controlling the driving device 530 to operate normally.

The second controller 560 is connected to the driving device 530 and the operating device 540 and can receive the on signal from the operating device 540. The second controller 560 is configured to, when receiving the on signal, output the drive enable signal to the driving device 530. Specifically, the drive enable signal is a power supply signal or an activation signal of the driving device 530, which is used for supplying electrical energy to the driving device 530 or activating and turning on the components in the driving device 530.

The driving device 530 is connected to the electric motor 510, the first controller 550, and the second controller 560 and can receive the drive signal from the first controller 550 and the drive enable signal from the second controller 560. The driving device 530 may be configured to drive the electric motor 510 to operate when receiving the drive signal and the drive enable signal, and the driving device 530 cannot drive the electric motor 510 to operate when receiving only the drive signal but failing to receive the drive enable signal or when receiving only the drive enable signal but failing to receive the drive signal.

The following is a more detailed description of the devices in the power tool 500 shown in FIG. 13.

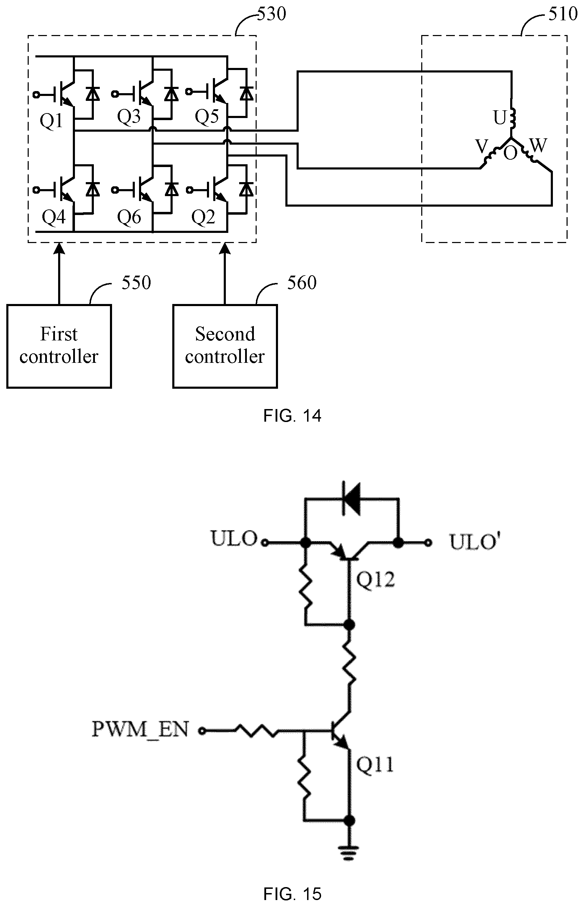

Referring to FIG. 14, in some examples, the driving device 530 may be a driver circuit formed by multiple semiconductor switching elements. In the case where the electric motor 510 is a three-phase electric motor, the driver circuit may be formed by six semiconductor switching elements. The drive signal outputted by the first controller 550 is transmitted to the semiconductor switching elements in the driving device 530 to change the on and off states of the semiconductor switching elements and then change the voltage state or current state applied to the windings of the electric motor 510, thereby controlling the electric motor 510 to perform commutation. The drive enable signal outputted by the second controller 560 is also transmitted to the driving device 530 to supply power or turn on the components in the driving device 530 so that the electric motor control based on the preceding drive signal has an energy basis or can be successfully activated. As shown in FIGS. 14 and 15, the electric motor 510 is a three-phase electric motor. The part of the driver circuit regarding the U phase in the driving device 530 may include multiple transistors Q11 and Q12, multiple resistors, rectifier diodes, and the like. In some examples, the transistors Q11 and Q12 in the driver circuit may be replaced by other semiconductor components such as optocouplers. The input signal of the transistor Q11 is the drive enable signal PWM_EN, and the input signal of the transistor Q12 is the drive signal ULO. After the drive enable signal PWM_EN is connected, Q11 and Q12 are turned on, and the output signal ULO' of the transistor Q12 may be outputted to the semiconductor switching elements.

In some examples, the operating device 540 may be a toggle switch. The toggle switch may output the on signal when toggled to a position corresponding to the on state and may output the off signal when toggled to a position corresponding to the off state. In some other examples, the operating device 540 may be a push switch. When the power tool 500 is switched from the off state to the on state, the push switch is pressed, and the switch contacts are briefly in contact and then separated. The jump signal generated in this case is the on signal. For example, the on signal may be a jump signal that changes from a high voltage to a low voltage. When the power tool 100 is switched from the on state to the off state, the push switch is pressed again, and the switch contacts are briefly in contact again and then separated. The jump signal generated in this case is the off signal. In other periods, the push switch is not pressed, the switch contacts are not in contact, and a stable non-jump signal may be continuously outputted to the outside, for example, a high voltage signal may be continuously outputted.

In the power tool 500 described in FIGS. 13 to 15, both the drive signal for controlling provided by the first controller and the drive enable signal for enabling provided by the second controller are required for driving the electric motor to operate normally. Both controllers respond to the on signal to output the signals. No matter which of the two controllers fails, the electric motor cannot be driven to operate, thereby providing a double guarantee for the normal operation of the electric motor, preventing the problem of accidental startup, and improving the safety of the tool and the user experience.

In some examples, the first controller 550 is further configured to stop outputting the drive signal to the driving device 530 when receiving the off signal from the operating device 540. The driving device 530 cannot drive the electric motor 510 to operate after losing the drive signal, and thus the electric motor 510 stops rotating. In some other examples, in addition to the first controller 550 stopping outputting the drive signal to the driving device 530, the second controller 560 may also be configured to stop outputting the drive enable signal to the driving device 530 when receiving the off signal from the operating device 540. The driving device 530 cannot drive the electric motor 510 to operate after losing the drive signal and the drive enable signal, and thus the electric motor 510 stops rotating. In this example, the two controllers stop outputting signals in response to the off signal, and when no failure occurs in the two controllers, it can be ensured that the electric motor stops rotating smoothly.

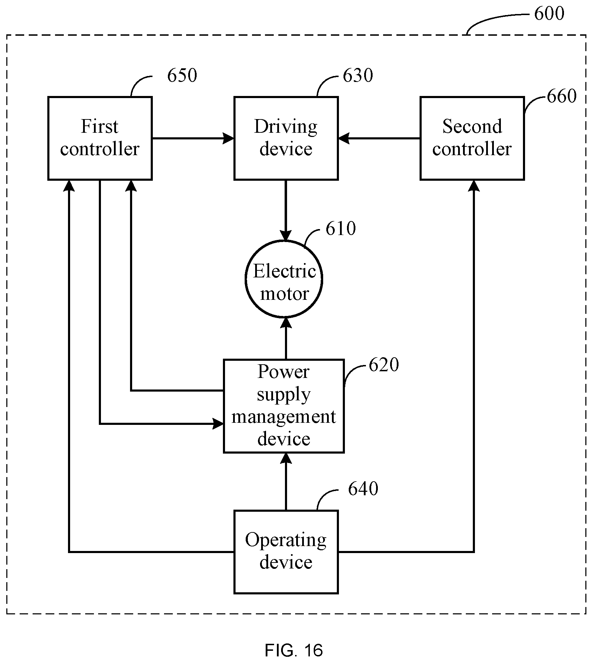

Referring to FIG. 16, FIG. 16 is a schematic diagram of electric control of a power tool 600 as another example of the present application. The power tool 600 includes an electric motor 610, a power supply management device 620, a driving device 630, an operating device 640, a first controller 650, and a second controller 660. The power tool 600 may partially or completely adopt the component composition and setting manner of the electric motor 510, the power supply management device 520, the driving device 530, the operating device 540, the first controller 550, and the second controller 560 in the power tool 500 according to requirements. Based on the power tool 500, the differences between the power tool 600 and the power tool 500 lie at least in the fact that the electrical energy of the first controller 650 in the power tool 600 is provided by the power supply management device 620, the power supply process of the power supply management device 620 is controlled by the first controller 650, and the power tool 600 can implement a delayed shutdown function.

In the power tool 600, the power supply management device 620 is connected to the operating device 640 and the first controller 650. The power supply management device 620 can receive the on signal from the operating device 640 and may be configured to, when receiving the on signal from the operating device 640, output the first enable signal to the first controller 650 so that the first controller 650 is powered. The first enable signal is a power supply signal of the first controller 650, which may be a voltage signal that satisfies the voltage requirement of the first controller 650. In some examples, the power supply management device 620 is also connected to the second controller 660. When receiving the on signal, in addition to outputting the first enable signal to the first controller 650, the power supply management device 620 may be further configured to output the second enable signal to the second controller 660 so that the second controller 660 is powered. The second enable signal is a power supply signal of the second controller 660, which may be a voltage signal that satisfies the voltage requirement of the second controller 660. The first enable signal and the second enable signal may have the same or different voltage values. For example, the first enable signal may be a 12 V voltage signal, and the second enable signal may be a 3.3 V signal. It is to be understood that in other examples, the power supply logic of the first controller 650 and the power supply logic of the second controller 660 may be independent of each other.

The first controller 650 may be configured to output a first power-off signal to the power supply management device 620 after waiting for a sixth preset duration T6 upon receiving the off signal from the operating device 640. The first power-off signal may be a voltage signal. In some examples, the first controller 650 may be further configured to output the first power-off signal to the power supply management device 620 when receiving the off signal from the operating device 640, that is, the sixth preset duration is zero. The power supply management device 620 may be configured to stop outputting the first enable signal to the first controller 650 when receiving the first power-off signal. In some examples, when receiving the first power-off signal, the power supply management device 620 may be further configured to stop outputting the second enable signal to the second controller 660 in addition to stopping outputting the first enable signal to the first controller 650. It is to be understood that in other examples, the power-off logic of the first controller 650 and the power-off logic of the second controller 660 may be independent of each other.

The following is a more detailed description of the devices in the power tool 600 shown in FIG. 16.

In some examples, the operating device 640 is a push switch, and the switch contacts are briefly in contact and then separated, failing to form a continuous circuit loop. Therefore, the power supply management device 620 cannot obtain a continuous on signal, may lose power when the on signal is lost after power-on, and can only provide power to the outside for a short period. To enable the power supply management device 620 to continuously supply power to the outside after power-on, the first controller 650 may be further configured to, when receiving the on signal from the operating device 640, output the keeping signal to the power supply management device 620 so that the power supply management device 620 can continuously supply power to the outside when the on signal is lost. The keeping signal may be a voltage signal. The power supply management device 620 may be configured to continue outputting the first enable signal to the first controller 650 when losing the on signal from the operating device 640 but receiving the keeping signal from the first controller 650. In some examples, the power supply management device 620 also continues outputting the second enable signal to the second controller 660.

The first controller 650 may be further configured to stop outputting the keeping signal to the power supply management device 620 when receiving the off signal from the operating device 640 so that the power supply management device 620 no longer supplies power to the outside. The power supply management device 620 may be configured to stop outputting the first enable signal to the first controller 650 when losing the on signal and the keeping signal. In some examples, the power supply management device 620 may also stop outputting the second enable signal to the second controller 660. In this case, the first controller 650 no longer outputs the keeping signal to the power supply management device 620, which may be regarded as outputting the first power-off signal to the power supply management device 620.

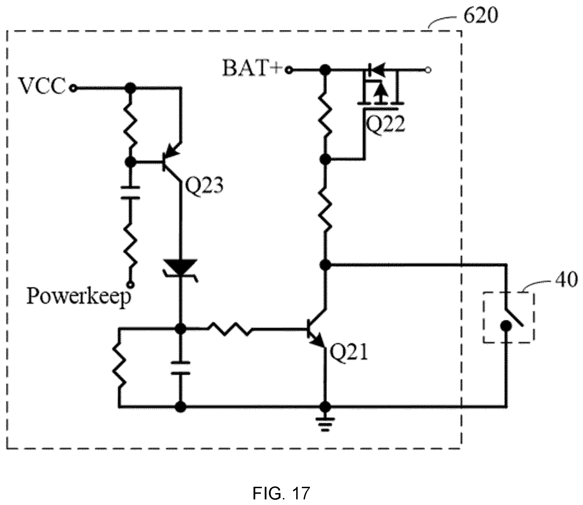

Referring to FIG. 17, the operating device 640 is a push switch, and part of the power supply circuit in the power supply management device 620 may include multiple transistors Q21, Q22, and Q23, multiple resistors, capacitors, and Zener diodes. In some examples, the transistors Q21, Q22, and Q23 in the power supply circuit may be replaced by other semiconductor components such as optocouplers. The input signal of the transistor Q23 may be the keeping signal Powekeep from the first controller 650. When the switch contacts in the operating device 640 are in contact, the transistor Q21 is short-circuited, the transistor Q22 is turned on, the power supply management device 620 is powered on successfully, and Q22 generates an output signal, which may be used as the first enable signal after processing such as voltage conversion. In some examples, the output signal may be used as the second enable signal. After the switch contacts in the operating device 640 are separated, Q21 is no longer turned on and Q22 is also not turned on. To enable the power supply management device 620 to maintain the power supply state, the first controller 650 receives the on signal and outputs the keeping signal Powerkeep. The keeping signal Powekeep turns on Q23, the output signal of Q23 may enable Q21 and Q22 to be on, and Q22 may continue outputting the signals. Therefore, the first enable signal can continue being outputted to the first controller 650. In some examples, the second enable signal also continues being outputted to the second controller 660.

In the case where the first controller 650 does not fail, after receiving the off signal and waiting for the sixth preset duration T6, the first controller 650 no longer outputs the keeping signal Powerkeep, Q23 is no longer turned on, Q21 and Q22 are no longer turned on, Q22 no longer outputs the signals, and thus the output of the first enable signal to the first controller 650 is interrupted. In some examples, the output of the second enable signal to the second controller 660 is also interrupted.

In the power tool 600 described in FIGS. 16 and 17, the electrical energy of the first controller and the second controller comes from the enable signals outputted by the power supply management device. When receiving the off signal, the first controller tries to interrupt the power supply of the power supply management device after waiting for a preset duration. In the case where the first controller does not fail, the delayed shutdown function of the power tool can be safely implemented. In the standby state where the electric motor stops rotating but the whole machine is not powered off, the two controllers may quickly respond to the user operation or control and implement auxiliary functions such as illumination and display until the whole machine is finally shut down.

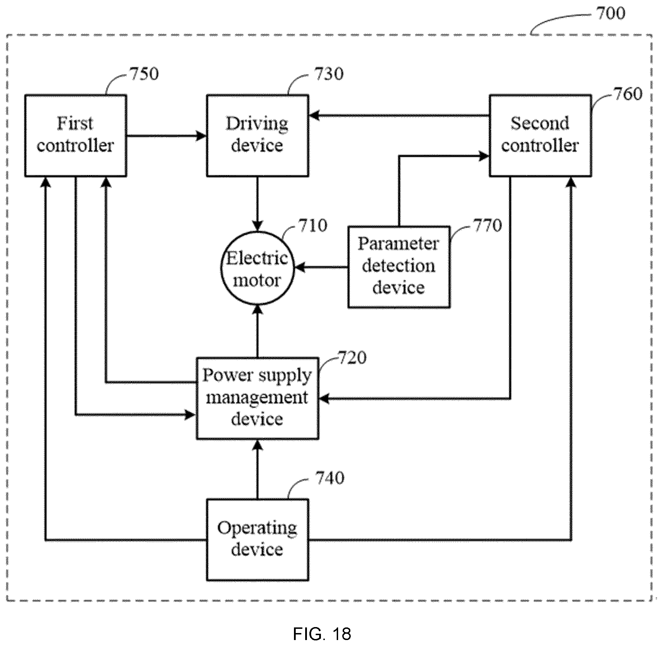

Referring to FIG. 18, FIG. 18 is a schematic diagram of electric control of a power tool 700 as another example of the present application. In addition to an electric motor 710, a power supply management device 720, a driving device 730, an operating device 740, a first controller 750, and a second controller 760, the power tool 700 further includes a parameter detection device 770. The power tool 700 may partially or completely adopt the component composition and setting manner of the electric motor 610, the power supply management device 620, the driving device 630, the operating device 640, the first controller 650, and the second controller 660 in the power tool 600 according to requirements. Based on the power tool 600, the differences between the power tool 700 and the power tool 600 lie at least in the fact that the power supply process of the power supply management device 720 in the power tool 700 is controlled by the first controller 750 and the second controller 760, and the power tool 700 can be safely shut down in the case where the first controller 750 fails.

In the power tool 700, the parameter detection device 770 is connected to the electric motor 710 and the second controller 760. The parameter detection device 770 can detect the operating parameter of the electric motor such as the phase current, the phase voltage, the rotor position, or the rotational speed of the electric motor and may be configured to detect the operating parameter of the electric motor 710 and transmit the operating parameter to the second controller 760. In some examples, the parameter detection device 770 may include various types of sensors.

The second controller 760 is also connected to the power supply management device 720. The second controller 760 is further configured to, after waiting for a seventh preset duration T7 upon receiving the off signal from the operating device 740, determine whether the operating parameter from the parameter detection device 770 is still in a changing state. The seventh preset duration T7 may be less than or equal to the sixth preset duration T6. After the off signal is sent out and the seventh preset duration T7 has elapsed, in the case where the first controller 750 does not fail, the first controller 750 has stopped outputting the drive signal to the driving device 730, the driving device 730 has stopped driving the electric motor 710 to operate, and the operating parameter of the electric motor 710 should be unchanged. Therefore, if the second controller 760 determines that the operating parameter of the electric motor from the parameter detection device 770 is not in the changing state, no action is performed, and the machine is shut down after the sixth preset duration T6.

In the case where the operating parameter of the electric motor is in the changing state, the first controller 750 may have problems such as a software failure, the first controller 750 still outputs the drive signal to the driving device 730, and the driving device 730 still drives the electric motor 710 to operate. In this case, the second controller 760 may be configured to output a second power-off signal to the power supply management device 720, and the second power-off signal may be a voltage signal. The power supply management device 720 may be configured to stop outputting the first enable signal to the first controller 750 when receiving the second power-off signal from the second controller 760. The first controller 750 stops outputting the drive signal to the driving device 730 when losing the first enable signal from the power supply management device 720, and the driving device 730 cannot drive the electric motor 710 to operate after losing the drive signal, so the electric motor 710 stops rotating. In some examples, when receiving the second power-off signal, the power supply management device 720 may be further configured to stop outputting the second enable signal to the second controller 760 in addition to stopping outputting the first enable signal to the first controller 750. In this manner, the whole machine is powered off.

In addition, considering that the transistors in the driving device 730 may be damaged when receiving the drive signal from the first controller 750 but does not receive the drive enable signal from the second controller 760, in some examples, the second controller 760 may not stop outputting the drive enable signal when receiving the off signal and may be configured to stop outputting the drive enable signal to the driving device 730 after the seventh preset duration T7 upon receiving the off signal, thereby avoiding the preceding problem of transistor damage.

The following is a more detailed description of the devices in the power tool 700 shown in FIG. 18.

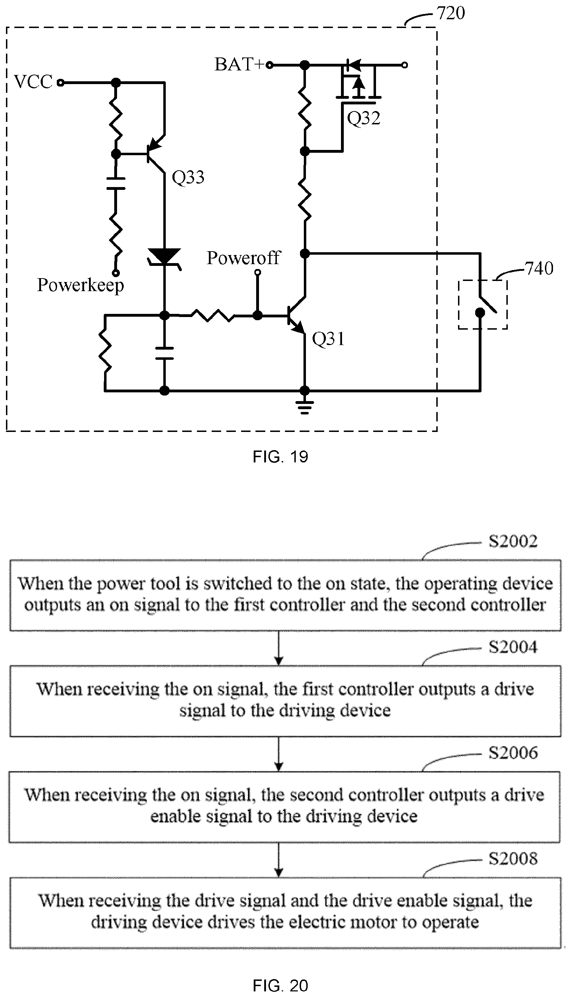

Referring to FIG. 19, in some examples, the operating device 740 is a push switch, and part of the power supply circuit in the power supply management device 720 may include multiple transistors Q31, Q32, and Q33, multiple resistors, capacitors, and Zener diodes. In some examples, the transistors Q31, Q32, and Q33 in the driver circuit may be replaced by other semiconductor components such as optocouplers. The input signal of the transistor Q31 may be the second power-off signal Poweroff from the second controller 760, and the input signal of the transistor Q33 may be the keeping signal Powerkeep from the first controller 750. When the power tool 700 is in the on state, the keeping signal Powekeep outputted by the first controller 750 turns on Q33, Q31 and Q32 are also turned on, and the signal outputted by Q32 is used as the first enable signal after processing such as voltage conversion.

In the case where the first controller 750 fails, the first controller 750 cannot stop outputting the drive signal when receiving the off signal, the driving device 730 still drives the electric motor 710 to operate, and the parameter detection device 770 transmits the changing operating parameter of the electric motor to the second controller 760. After the seventh preset duration T7 upon receiving the off signal, the second controller 760 determines that the current operating parameter of the electric motor is in the changing state and outputs the second power-off signal Poweroff. The second power-off signal Poweroff turns off Q21, Q22 is also turned off, Q22 no longer outputs the signal, the output of the first enable signal to the first controller 750 is interrupted, the first controller 750 cannot output the drive signal to the driving device 730 due to the loss of the power supply, the driving device 730 stops driving the electric motor 710 due to the loss of the drive signal, and the electric motor 710 stops rotating. In some examples, Q22 no longer outputs the signal, the output of the second enable signal to the second controller 760 is also interrupted, and the whole machine is powered off.

In the power tool 700 described in FIGS. 18 and 19, the second controller determines whether the electric motor is still operating through the state of the operating parameter of the electric motor, that is, the second controller determines whether the first controller fails and tries to interrupt the power supply of the power supply management device to the first controller when the parameter changes (the first controller fails) so that the first controller is powered off and stops outputting the drive signal. In this manner, in the case where the first controller fails, the electric motor stops rotating smoothly or the machine is shut down smoothly. As long as one of the two controllers can still operate normally, the problem of being unable to shut down does not occur, thereby improving the safety of the tool and the user experience.

FIG. 20 is a flowchart of a control method for a power tool as an example of the present application. The control method shown in FIG. 20 may be applied to the power tool described above.

The control method for a power tool may include the specific steps below.

In S2002, when the power tool is switched to the on state, the operating device outputs an on signal to the first controller and the second controller.

In S2004, when receiving the on signal, the first controller outputs a drive signal to the driving device.

In S2006, when receiving the on signal, the second controller outputs a drive enable signal to the driving device.

In S2008, when receiving the drive signal and the drive enable signal, the driving device drives the electric motor to operate.

The basic principles, main features, and advantages of the present application are shown and described above. It is to be understood by those skilled in the art that the preceding examples do not limit the present application in any form, and any technical solutions obtained through equivalent substitutions or equivalent transformations are within the scope of the present application.

## Claims

1. A power tool, comprising:
an electric motor;
a power supply management device comprising a power supply and configured to supply power to at least the electric motor;
a driving device configured to drive the electric motor to operate to implement a main function of the power tool; and
an operating device configured to be operated by a user to activate one or more functions of the power tool and output a function signal corresponding to a function activated by the user to the power supply management device, wherein the power tool has the main function and at least one auxiliary function, and the function signal comprises a main function signal corresponding to the main function and an auxiliary function signal corresponding to each of the at least one auxiliary function;
wherein the power supply management device is further configured to output a first enable signal when receiving any function signal and output a third enable signal to the driving device when receiving the main function signal;
wherein the power tool further comprises:
a first controller connected to the power supply management device and configured to output a first drive signal to the driving device when receiving at least the first enable signal;
wherein the driving device is further configured to drive the electric motor to operate when receiving the third enable signal and the first drive signal.

2. The power tool of claim 1, wherein the operating device is further configured to output the main function signal to the first controller when the user activates the main function; and the first controller is also connected to the operating device and is further configured to output the first drive signal to the driving device when receiving the first enable signal and the main function signal.

3. The power tool of claim 1, wherein the driving device comprises a driver circuit and a drive signal generation circuit; the first controller is further configured to output the first drive signal to the driver circuit and output a second drive signal to the drive signal generation circuit when receiving at least the first enable signal; the drive signal generation circuit is configured to output a voltage-boosted second drive signal to the driver circuit when receiving the third enable signal and the second drive signal; and the driver circuit is configured to drive the electric motor to operate when receiving the first drive signal and the voltage-boosted second drive signal.

4. The power tool of claim 1, further comprising:
an auxiliary device configured to implement an auxiliary function of the at least one auxiliary function of the power tool; and
a second controller connected to the operating device and the power supply management device;
wherein the operating device is further configured to output the function signal corresponding to the function activated by the user to the second controller; the power supply management device is further configured to output a second enable signal to the second controller when receiving any function signal; and the second controller is configured to control a corresponding auxiliary device to operate to implement a corresponding auxiliary function of the at least one auxiliary function when receiving the second enable signal and an auxiliary function signal corresponding to any of the at least one auxiliary function.

5. The power tool of claim 4, wherein the at least one auxiliary function comprises an interface display function, and the auxiliary device comprises an interface display device corresponding to the interface display function; and the second controller is further configured to, when receiving the second enable signal and an auxiliary function signal corresponding to the interface display function, light up the interface display device and turn off the interface display device after a first preset duration.

6. The power tool of claim 4, wherein the at least one auxiliary function comprises a state of charge display function, and the auxiliary device comprises a state of charge display device corresponding to the state of charge display function; and the second controller is further configured to, when receiving the second enable signal and an auxiliary function signal corresponding to the state of charge display function, light up the state of charge display device and turn off the state of charge display device after a second preset duration.

7. The power tool of claim 4, wherein the operating device is further configured to be operated by the user to deactivate the one or more functions of the power tool and interrupt an output of a function signal corresponding to a function deactivated by the user to the second controller and the power supply management device.

8. The power tool of claim 7, wherein the second controller is further configured to, when losing the main function signal, output a first keeping signal to the power supply management device and interrupt transmission of the first keeping signal after a third preset duration; and the power supply management device is further configured to interrupt an output of the third enable signal to the driving device when losing the main function signal and the first keeping signal.

9. The power tool of claim 8, wherein the second controller is further configured to, when losing all function signals, output a second keeping signal to the power supply management device and interrupt transmission of the second keeping signal after a fourth preset duration; the fourth preset duration is greater than or equal to the third preset duration; and the power supply management device is further configured to interrupt an output of the first enable signal to the first controller when losing all the function signals and the second keeping signal.

10. The power tool of claim 9, wherein the second controller is further configured to, when losing all the function signals, output a third keeping signal to the power supply management device and interrupt transmission of the third keeping signal after a fifth preset duration; the fifth preset duration is greater than or equal to the fourth preset duration; and the power supply management device is further configured to interrupt an output of the second enable signal to the second controller when losing all the function signals and the third keeping signal.

11. A power tool, comprising:
an electric motor;
a power supply management device comprising a power supply and configured to supply power to at least the electric motor;
a driving device configured to drive the electric motor to operate to implement a main function of the power tool; and
an operating device configured to be operated by a user to activate a main function and output a main function signal corresponding to the main function to the power supply management device;
wherein the power supply management device is further configured to output a first enable signal and output a third enable signal to the driving device when receiving the main function signal;
wherein the power tool further comprises:
a first controller connected to the power supply management device and configured to output a first drive signal to the driving device when receiving at least the first enable signal;
wherein the driving device is further configured to drive the electric motor to operate when receiving the third enable signal and the first drive signal.

12. A power tool, comprising:
an electric motor;
a power supply management device comprising a power supply and configured to supply power to at least the electric motor;
a driving device configured to drive the electric motor to operate; and
an operating device configured to be operated by a user to switch on and off states of the power tool and output a corresponding on signal or off signal;
wherein the power tool further comprises:
a first controller connected to the operating device and the driving device and configured to output a drive signal to the driving device when receiving the on signal; and
a second controller connected to the operating device and the driving device and configured to output a drive enable signal to the driving device when receiving the on signal;
wherein the driving device is further configured to drive the electric motor to operate when receiving the drive signal and the drive enable signal.

13. The power tool of claim 12, wherein the first controller is further configured to stop outputting the drive signal to the driving device when receiving the off signal.

14. The power tool of claim 12, wherein the power supply management device is connected to the first controller, and the power supply management device is further configured to output a first enable signal to the first controller when receiving the on signal.

15. The power tool of claim 14, wherein the first controller is further configured to output a first power-off signal to the power supply management device after waiting for a sixth preset duration upon receiving the off signal; and the power supply management device is further configured to stop outputting the first enable signal to the first controller when receiving the first power-off signal.

16. The power tool of claim 14, wherein the first controller is further configured to output a keeping signal to the power supply management device when receiving the on signal; and the power supply management device is further configured to continue outputting the first enable signal to the first controller when losing the on signal and receiving the keeping signal.

17. The power tool of claim 16, wherein the first controller is further configured to stop outputting the keeping signal to the power supply management device after waiting for a sixth preset duration upon receiving the off signal; and the power supply management device is further configured to stop outputting the first enable signal to the first controller when losing the keeping signal.

18. The power tool of claim 15 or 17, further comprising a parameter detection device connected to the electric motor and the second controller and configured to detect an operating parameter of the electric motor and transmit the operating parameter of the electric motor to the second controller, wherein the second controller is further configured to output a second power-off signal to the power supply management device after waiting for a seventh preset duration upon receiving the off signal in a case where the operating parameter is still in a changing state; and the power supply management device is further configured to stop outputting the first enable signal to the first controller when receiving the second power-off signal.

19. The power tool of claim 18, wherein the second controller is further configured to stop outputting the drive enable signal to the driving device after waiting for the seventh preset duration upon receiving the off signal.

20. The power tool of claim 18, wherein the first controller is further configured to stop outputting the drive signal to the driving device when losing the first enable signal.
